# EUROPEAN PATENT APPLICATION

(11) **EP 1 328 028 A2**
(43) Date of publication of application: **16.07.2003**
(21) Application number: 02017788.7
(22) Date of filing: 12.08.2002
(51) Int. Cl.: H01M 4/50, H01M 4/02, C01G 45/02, H01M 10/40

(54) **A cathode active material for a lithium secondary battery and a manufacturing method therefor and a lithium secondary battery using said active material and a setup module of said lithium secondary battery using said cathode active material**

(30) Priority: 09.01.2002 JP 2002001965
(71) Applicant: Hitachi, Ltd., Chiyoda-ku, Tokyo 101-8010 (JP); HITACHI METALS, LTD., Minato.ku, Tokyo 105-8614 (JP); Shin-Kobe Electric Machinery Co. Ltd., Tokyo 160-0023 (JP)
(72) Inventor: Kasai, Masahiro, Mito-shi, Ibaraki 310-0912 (JP); Kumashiro, Yoshiaki, Mito-shi, Ibaraki 310-0817 (JP); Nakajima, Genei, Kumagaya-shi, Saitama 360-0856 (JP); Uchikawa, Akio, Kumagaya-shi, Saitama 360-0856 (JP); Nakai, Kenji, Fukaya-shi, Saitama 366-0035 (JP)
(74) Representative: Beetz & Partner Patentanwälte

(57) **Abstract**

The purpose of the present invention is to provide a cathode active material for a lithium secondary battery to give said battery a long-lasting high output property, and to disclose a method of manufacturing said active material and a lithium secondary battery using said active material, and to provide a setup module composed of a combination of plurality of said batteries. The present invention is characterized by a cathode active material for a lithium secondary battery and a method of manufacturing said active material, a lithium secondary battery using said active material, and a setup module of batteries composed of a combination of a plurality of said lithium secondary batteries, wherein said cathode active material is an electrostatically and/or mechanically gathered aggregation of oxide which, having the form of a primary particle, includes lithium and manganese, said aggregation separates into discrete primary particles by an external physical force.

## Description

### BACKGROUND OF THE INVENTION

### 1.Field of the Invention

The present invention relates to a new cathode active material for a cathode in a lithium secondary battery and a manufacturing method therefor, and a lithium secondary battery using said active material and a setup module of said lithium secondary battery using said cathode active material.

### 2.Description of the Prior Art

In late years, lithium batteries are used as the power source in information equipment such as personal computers, mobile telephones, and mobile terminals. In the automobile industry, electric vehicles equipped with lithium secondary batteries are now on their steps toward practical use for reduced emission of carbon dioxide and for reduced consumption of energy in response to environmental demands against, for example, global warming and air pollution.

Electric vehicles require their secondary batteries to have higher battery-output than those secondary batteries used in information equipment and to have a long time availability for more than 10 years.

A secondary battery has several indexes to describe its performance. The indexes include such as the electrical quantity (expressed usually in Ah: ampere-hour) for the total electrical quantity that the battery can store, the per-hour energy rate (W: watt) for a permissible energy rate in charging thereto and discharging therefrom, and an electrical power capacity (Wh: watt-hour) for the total energy that the battery can serve.

Above-mentioned battery-output means said per-hour energy rate (W: watt). A battery having satisfactory battery-output performance is the battery of which total energy (Wh: watt-hour), that is the product of the discharging capacity (Ah: ampere-hour) expressed by the total electrical quantity and the average discharging potential (V), i.e., the electrical power capacity, is large. Said battery-output is dominated by the internal resistance of a secondary battery. Repeated charge and discharge invites deterioration in the secondary battery capacity and increased internal resistance thereof causing a reduction in said battery-output.

The lifetime required for secondary batteries on electric vehicles can be attained by lowering the internal resistance thereof to high-power their output and by repressing output declination that is attributable to the internal resistance increase.

Effort has been made to improve the lifetime of lithium secondary batteries in personal computers and mobile telephones through repression of dwindling in battery capacity. However, lithium secondary batteries on electric vehicles still need more repression of such dwindling in battery capacity and in output attributable to the internal resistance increase.

As one of methods for repressing output dwindling in a lithium secondary battery, Japanese patent laid-open No. 2000-113886(2000), for example, has disclosed a lithium secondary battery using a cathode active material of a specific structure. According to this disclosure, the shape of the primary particle in said active material is almost an octahedron and the secondary particle that said primary particle forms is 1 µm to 20 µm in particle size. In prior arts, however, this technique gives no improvement to a resistance rate in terms of discharging 1-Clouromb (C) of electric quantity; satisfactory output performance to drive an electric vehicle is not attained. Said technique is further inadequate for repressing the increase of the internal resistance of a secondary battery caused by charging/discharging cycles although the technique may be efficacious for reduction of initial internal resistance.

Japanese patent laid-open No. 2001-110417 and 2001-48547 (2001)have disclosed other lithium secondary batteries, which use a cathode material, expressed with a chemical formula: Li₁₊ₓA_{y}B_{z}Mn_{2-x-y-z}, to suppress dwindling in battery capacity during charge/discharge cycles under high temperatures. However, this prior art is inadequate to suppress the increase of the internal resistance of a secondary battery caused by charge/discharge cycles.

### SUMMARY OF THE INVENTION

The prior art was not always enough for developing a lithium secondary battery with acceptable long service life and high output power.

The purpose of the present invention is to provide a cathode active material for a lithium secondary battery to give said battery a long-lasting high output property, and to disclose methods of manufacturing said active material and a lithium secondary battery using said active material.

The present invention further intends to provide a setup module of battery composed of a plurality of lithium secondary batteries having high output.

The present invention is characterized by a cathode active material for a lithium secondary battery.

Said active material is comprised of an oxide particle which includes lithium and manganese; wherein said oxide particle is comprised of a primary particle and of a secondary particle composed of bonded particles of said primary particle, and the amount of said primary particle occupies more than half of the entire amount of said oxide particle. The average particle size of said oxide particle is preferred being in the range of 0.05 µm to 5 µm. In particular, the occupancy of said primary particle either in weight or in number is preferred to be 90 % or more, or over 95 % in the sense of almost-all as more preferable content. This means that substantial absence of secondary particles therein is preferred.

The present invention is further characterized by another cathode active material for a lithium secondary battery.

Said active material is comprised of an oxide particle which includes lithium and manganese; wherein said oxide particle ranges 0.05 µm to 5 µm in its average particle size, and 95 % or more of the entire amount of said oxide particle fall within 0.5 µm to 3.0 µm in their particle sizes.

Therefore, the particle that the present invention features is an electrostatically and/or mechanically gathered aggregation of oxide which, having the form of a primary particle, includes lithium and manganese; said aggregation is in a form that may separate into discrete primary particles by an external physical force.

The present invention further features a cathode active material of another style which includes a particle of active material; wherein, not having a secondary particle structure composed of chemically bonded primary particles constituted of single-crystal-like particles, said active material forms an electrostatically and/or mechanically gathered aggregation which will be cracked into discrete primary particles by an external physical force.

In the above-mentioned primary particles, it is preferred that the average particle size is 0.05 µm to 5 µm and that the oxide suitable to the active material for a cathode is a spinel-structured oxide expressed with the chemical formula:

Li₁₊ₓMn_{2-x-y}M_{y}O_{4-d}

(where; 0<x<0.33, 0<y<0.50, 0<d<0.10, and Mn and M are cation elements other than Li).

The present invention still features a lithium secondary battery comprising a cathode, an anode, a separator, and nonaqueous electrolytic solution, wherein a cathode active material in said cathode is comprised of said cathode active material.

The lithium secondary battery according to the present invention is preferred to have the output energy density ranging from 650 W/kg to 2000 W/kg under a depth of discharge of 50 %, and is preferred to be designed into a setup module of batteries that supplies electric power to externals, in which said lithium secondary batteries are connected in series or parallel, and said setup module of batteries has the output energy density ranging from 650 W/kg to 2000 W/kg under a depth of discharge of 50 %.

The lithium secondary battery according to the present invention has a cathode and an anode, wherein a matter that occludes or releases lithium is hereinafter referred to as a cathode active material or an anode active material.

The cathode active material is an oxide, which contains at least lithium and transition metal, having layer structure such as LiCoO₂ or LiNiO₂, or having spinel crystal structure such as LiMn₂O₄.

In the present invention, a single-crystal-like primary particle is dispersed in the cathode to obtain the lithium secondary battery having low internal resistance and high output offering long lifetime. In the prior art, powder particles in a cathode active material are composed of primary particles and secondary particles.

Said primary particle is a minute particle smaller than 0.1 µm in its size, which chemically bonds one with the other to form a secondary particle roughly sized 5 µm to 10 µm. The figuration of crystallization of said primary particle largely depends on manufacturing conditions such as composition, processing temperature, and raw material mixing condition.

It is preferred in the present invention that the cathode active material is to use a spinel-structured Mn-containing oxide expressed with the chemical formula:

Li₁₊ₓMn_{2-x-y}M_{y}O_{4-d}

(where; 0<x<0.33, 0<y<0.50, 0<d<0.10, and M is a cation element other than Mn and Li).

As its raw matters, said spinel-structured Mn-containing oxide uses: manganese dioxide, manganese carbonate, manganese nitrate, lithium carbonate, lithium hydroxide, lithium oxide, and other matters such as oxide, carbonate, nitrate, and hydroxide those contain cationic element other than Li and Mn.

Raw matters for the material powder are supplied in pulverulence mixture of predetermined composition, which is ground and mixed by mechanical means such as a ball mill. Preferred particle size of the ground raw material powder is 0.5 µm or smaller, particularly 0.01 µm or less. The sizes of particles in said ground raw material powder have a predetermined distribution. Said ground raw material powder is allowed to react by sintering under a temperature between 800°C and 1200°C, preferably between 900°C and 1100°C, to cause particles in said ground raw material powder to mutually bond for growing into crystals forming primary particles.

Said ground material powder can also be obtained in following manner. Metallic elements as the raw matters are supplied in acidic aqueous solutions, which are mixed in predetermined composition. The pH value of this mixed solution is then brought into a weak alkaline using alkaline aqueous solution such as ammonia water. This pH value change precipitates desired material in a form of metallic hydroxide, the same substance as above-mentioned ground material powders mixture. In the present invention, the cathode active material having a primary particle grown to have the average particle size of 0.05 µm or more but 5 µm or less has been obtained by using said ground material powder or said precipitate material with sintering under a temperature between 800°C and 1100°C, a higher temperature than the sintering temperature in the prior art.

Particles in the material for the cathode active material obtained by the present invention does not have such definite secondary particle structure as is in the material for the cathode active material in the prior art. The secondary particle in the prior art is formed by strong chemical bond among primary particles. Contrary to this, the primary particle in the cathode active material in the present invention bonds weakly, compared to the secondary particle in the prior art, one with the other through electrostatic attraction or mechanical contact. This means that the secondary particle in the present invention is another aggregate that would be featured by a definition different from that in the prior art. Said aggregation that the weak bonding forms can be easily broken into primary particles that form said aggregation by applying physical force from outside.

The shape of the primary particle of oxide particle, which is the cathode active material in the present invention, does not essentially require to be a round grain; shapes such as octahedron, cube, and sphere are acceptable. A growth conformation that permits easy separation into primary particles in an electrode is enhanced importance. Said primary particle is independent each other and said spherical primary particles are dispersed in the electrode structure to have a composition that contains particles which have no mutual contact among said particles.

The particle size (or diameter) designates the representative dimension of particles having indeterminate shape; the equivalent-circle diameter and Feret Diameter are some of accepted notations therefor. The distribution of the particle sizes can be determined with the micro-tracking method or with the particle image analysis method. The micro-tracking method is a method wherein a laser beam is irradiated to powders dispersed in a medium like water to examine the beam diffraction. Thereby, distribution of secondary particle sizes is measured together with the average particle size (D50: the particle size at the center of the distribution).

The measuring method of the distribution of the primary particle is as follows.

A test specimen, prepared by adding a slight amount of a test sample into a dispersion medium like pure water followed by agitation and ultrasonic dispersing, is examined with the micro-tracking method which bases on laser beam scattering phenomena. According to this method, the primary particle in the cathode active material in the present invention distributes approximately between 10 µm to 30 µm in particle size. This means that aggregations of secondary particles are not fully separated.

To know the distribution of the primary particles, the following treatment would be suitable. The cathode active material in the present invention in question for the particle distribution, pure water, and grinding balls are put together in a processing pot. Then they are given about one hour agitation to bring materials in the pot to slurry followed by diluting to proper consistency enough for measurement. The micro-tracking method is then applied thereto to obtain the particle distribution. A small amount of surface active agent may be added to the slurry in this treatment to expedite dispersion of the primary particles. In this measurement, a slight amount of unseparated particles, aggregations of particles not separated, may be involved. These particles can be discriminatively determined as the existence of a specific distribution having a very small frequency. Because, this distribution appears around the size such as about 20 µm, which is far-larger side of the main portion of size distribution of primary particles of about 0.05 µm to 5 µm in size.

Further to this measuring method, the particle size distribution is also determined by image processing over the observed images obtained under a scanning electron microscope (SEM). The described below gives the measuring method of the particle size distribution in an electrode.

The electrode piles are separated form a collector and are solved in a solvent such as N-methyl pyrrolidone to prepare them in slurry. The slurry is then filtered and fully washed to remove bonding agents away. A powder mixture of conductive member and a cathode active material obtained by this filtering is heat treated in oxygen flow at a temperature between 500 °C and 650 °C to fully burn the conductive member away into carbon dioxide. Since the residual powder after such burning is the cathode active material, the particle size distribution of said cathode active material in an electrode can be measured by applying said micro-tracking method to this residual powder.

The method for manufacturing a high-output lithium secondary battery according to the present invention may be as follows for example.

Firstly, slurry is prepared by mixing said cathode active material and conductive member of carbon powder with bonding agent like polyvinylidene fluoride. The mixing ratio of said conductive member to said cathode active material is preferred to be between 5 % to 20 % in weight. In this preparation, a mixer that has an agitating means such as a rotating blade is used for ample blending so that primary particles in the cathode active material are well dispersed in the slurry. By said mixing process, slurry having the primary particles well dispersed therein is prepared, and electrode coating is performed using this. To attain good dispersion state in the mixing, it is preferred that primary particles should have been grown into adequate size forming an aggregation structure relied on relatively weak bonding force like electrostatic attraction as the cathode active material in the present invention is so.

Since primary particles thus dispersed are in contact with conductive member or electrolytic solution in the electrode of a battery having large enough contacting area, diffusion of lithium ion in the battery becomes easier realizing the battery of high-power and long lifetime. In the present invention, the cathode active material not having any definite secondary particle structure is used and well mixed said slurry is double-side coated on the aluminum foil having a thickness between 15 µm to 25 µm using, for example, a roll-transfer coating equipment. After double-side coating, the coated aluminum foil is press-dried to be made into a cathode electrode plate. The coated electrode pile is preferred to have a thickness between 20 µm to 100 µm.

An anode uses graphite or other amorphous carbon or their mixture as an active material, which is, likewise in the cathode preparation, mixed with a bonding agent for coating and pressing to form an electrode. The preferred thickness of the electrode pile is between 20 µm to 70 µm. The anode uses a copper foil of 7 µm to 20 µm thick as a collector. The mixing ratio in coating is preferred to be, for example, 90:10 in weight ratio of the anode active material to the bonding agent.

The electrode thus coated is cut in a predetermined length and is provided with a tab for current-leader by spot welding or ultrasonic welding. The tab, having a rectangular shape and being made of a metallic foil, the same material as the collector, is a device provided to lead out current from the electrode. Tabbed electrodes are then cylindrically wound to form a group of electrodes being interleaved with separators of a porous plastic, for example polyethylene (PE) or polypropylene (PP), and packed in a cylindrical case. Alternatively, tabbed electrodes may be accommodated in bag-like separators and stacked for packing in a square case. The case prefers stainless steel or aluminum as its material. On being packed, electrolytic solution is filled in the case, which is then sealed.

As to the electrolytic solution, a solution such that an electrolyte, like LiPF₆, LiBF₄, LiCiO₄, is solved into a solvent such as diethyl carbonate (DEC), ethylene carbonate (EC), and propylene carbonate (PC) is preferred. The concentration of said electrolytic solution is preferred to be between 0.7 M and 1.5 M. Filling with the electrolytic solution then sealing the battery case completes the battery.

In the cathode plate in the battery of the present invention fabricated following above-mentioned procedures, primary particles having particle sizes from 0.05 µm to 5 µm present in a ratio more than 50 % of the entire amount of the cathode active material particle. The present invention has realized a battery having high-output and long life by ensuring the presence ratio of the primary particle alone in the cathode active material on the electrode being 50 % or more. If this existence ratio is smaller than 50 %, high-output battery is not obtainable though the same cathode active material is used therein.

The following procedure will provide a setup module of batteries wherein plural batteries by the present invention are connected. Firstly, means for detecting voltage of individual batteries and means for controlling currents in charging and discharging each of batteries are provided; then, means for commanding said two means is furnished. Communicability on electrical signal is provided among these means. In charging stage, batteries are charged by flowing current when their voltages detected by said means for detecting voltage of battery are lower than a predetermined charging voltage. When batteries reach said predetermined voltage, the charging current is interrupted by the electrical signal generated from said means for commanding to prevent batteries from overcharge. In discharging stage of said setup module of batteries, voltages of individual batteries are likewise detected by said means for detecting voltage of battery and discharging current is prevented from flowing out when voltages of individual batteries reach a predetermined discharging voltage.

As stated above, accurate detection of voltages of individual batteries to control said batteries free from overcharging or over-discharging realizes a setup module of batteries with high-output. The accuracy in detecting the battery voltage is preferred to have a voltage resolution of 0.1 V or less, or, 0.02 V or small for more preferred design. The voltage range for charging and discharging of each battery is preferred to be designed so that charging ceases at 4.2 V and discharging at 2.8 V. Thereby, the setup module of batteries of high-output having an output energy density over 650 W/kg is obtained.

According to the present invention, a cathode active material, including manufacturing method thereof, for a lithium secondary battery of high-output with ling lifetime, and a setup module of said secondary batteries are realized by means of increased contact area of the active material with the electrolyte.

### BRIEF DESCRIPTION OF DRAWINGS

Fig. 1 is a schematic view of the shape of an oxide particle that is the cathode active material by the present invention.
Fig. 2 is a diagram of the particle size distribution of the secondary particle in an oxide particle that is the cathode active material by the present invention.
Fig. 3 is a diagram of the particle size distribution of the primary particle in an oxide particle that is the cathode active material by the present invention.
Fig. 4 is a cross sectional view of the electrode by the present invention.
Fig. 5 is a cross sectional view of the lithium secondary battery by the present invention.
Fig. 6 is a schematic illustration of the particle structure of the oxide particle in the cathode active material in the comparative example 1.
Fig. 7 is the diagram of the X-ray diffraction pattern of the cathode active material in the comparative example.
Fig. 8 is the SEM-photograph of the cathode plate in the comparative example.
Fig. 9 is a diagram to show the relationship between the sintering temperature and the average particle size of the primary particle.
Fig. 10 is a diagram to show the relationship between the sintering temperature and the battery output.

### DESCRIPTION OF THE PREFERRED EMBODIMENTS

The following explains an embodiment of the present invention. However, it is to be understood that the scope of the present invention is not limited to the specific embodiments described hereunder.

### (Embodiment 1)

The cathode active material expressed with the chemical formula Li_{1.05}Mn_{1.90}Co_{0.05}O₄ was prepared in the following manner. Raw materials: LiCo₃, MnO₂, and Co₃O₄, were blended in a mixing ratio wherein metallic elements thereof satisfy a predetermined ratio, and the blend was ground and mixed using a ball mill of alumina. In this treatment, the grinding condition was regulated so that the particle size of ground raw material powder fall into the range of 0.05 µm or under. Sintering, as stated above, fine-ground powder material of 0.05 µm or less in its particle size has an effect that a cathode active material having an aggregational structure relied on weak bond among primary particles is produced without developing into secondary particles.

Ground raw material was put in a container of pure alumina then sintered at 1000 °C for 40 hours in the air to synthesize a spinel type oxide. Sintering at a high temperature over 950 °C as mentioned above has the effect to boost particles grow into primary particles easing separation thereof one from the other by shredding.

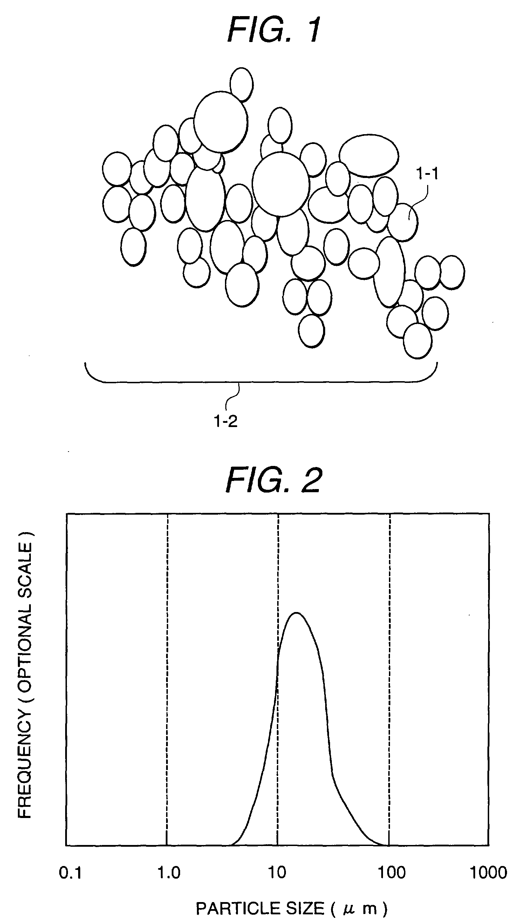

Fig. 1 shows approximate shape of the cathode active material obtained through above-mentioned treatment. Since this cathode active material is formed from partially sintered particles, the shape of the material after shredding with an oscillating mill becomes the primary particle 1-1 shown in Fig. 1, which forms the aggregate 1-2 gathering under mechanical contact or electrostatic force.

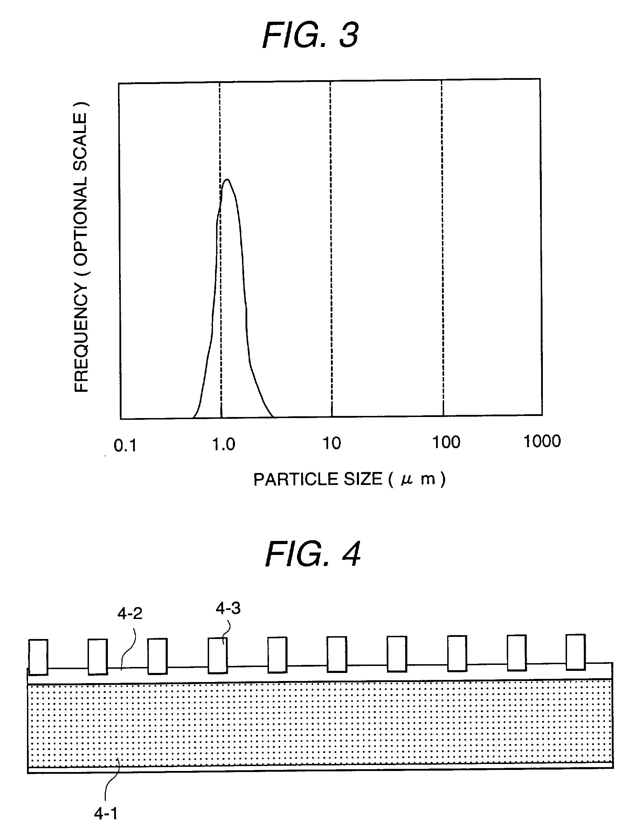

Fig. 2 is a diagram that shows the particle size distribution of said active material measured with the micro-tracking method. The average particle size (D50) was 15 µm. 10 ml of pure water was then added to 20 g of said active material to form slurry, which was put in an alumina pot and weakly ground for 60 min. Said slurry of the active material was measured again with the micro-tracking method for particle size distribution using water as a medium; Fig. 3 is the result thereof. The average particle size (D50) was 1.5 µm because of occurrence of separation of aggregation relied on mechanical contacts or electrostatic force. In this particular embodiment, 95 % or more particles, substantially 100 %, was occupied by those having 0.5 µm to 3.0 µm in particle size; and 90 % or more by 0.8 µm to 3.0 µm. The primary particle occupied 95 % or more in the entire weight and 99 % or more in the particle number.

Using the cathode active material by the present embodiment, a battery was fabricated. The battery fabrication followed below-mentioned procedure. First, the cathode was coated. The cathode active material in the present embodiment, a conductive member of graphite, a conductive member of carbon black, and polyvinylidene fluoride (PVDF) are mixed in the weight ratio 80:13:3:5 to prepare slurry. The slurry was agitated with a planetary mixer for 3 hours to bring the slurry well mixed.

Such long-time mixing has the effect that the mixing makes the primary particle in the cathode active material in the present embodiment disperse uniformly into the electrode. The slurry was coated on an aluminum foil of 160 mm wide and 15 µm thick using a roll transfer coating machine. The coated aluminum foil was dried at 100 °C to volatilize solvent, and was coated likewise on the reverse face thereof. After being dried again, the coated foil was roll-pressed under the total pressure of 150 kgf/cm to finish into an electrode. The density of the electrode pile in this processing was 2.5 g/cm³. For the anode, a mixture of graphite and amorphous carbon in the weight ratio of 90:10 was used. The anode was fabricated employing the same procedure as was in the cathode fabrication but using the slurry prepared by adding 6.5 wt-% of PVDF in weight ratio to said mixture. Said slurry was agitated with a planetary mixer for 30 minutes to bring the slurry well mixed. The slurry was coated on an electrolytic copper foil of 165 mm wide and 15 µm thick using a roll transfer coating machine. The coated copper foil was dried at 100 °C to volatilize solvent, and was coated likewise on the reverse face thereof. After being dried again, the coated foil was roll-pressed under the total pressure of 150 kgf/cm to finish into an electrode.

Fig. 4 is a cross-sectional view of the electrode by the present invention. Each of the cathode and the anode was cut in a length of 3500 mm to manufacture a cathode plate and an anode plate. On the cathode and anode, further to an electrode coating 4-1, a non-coated part 4-2 is connected, on which collector tabs 4-3 were then installed at an interval of 300 mm with ultrasonic welding. The material of the collector tab 4-3 was aluminum for said cathode and copper for said anode.

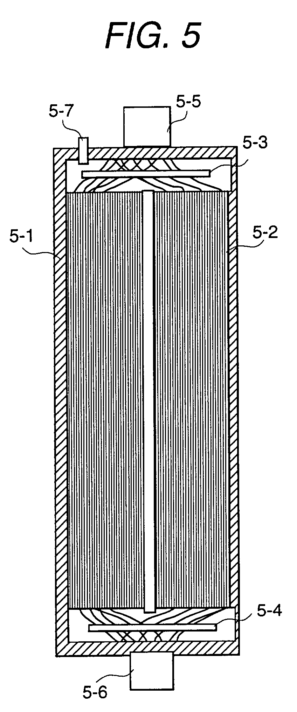

A group of electrodes was fabricated by cylindrical winding with interleaves of porous polyethylene film of 25 µm thick. The cross section of the fabricated electrode is as shown in Fig. 5. A battery case 5-1 in the figure was made of SUS304, 35 mm in diameter, and 1100 mm in height. A cylindrically wound group of electrodes 5-2 was accommodated in said battery case 5-1, and a cathode collector tab 5-3 and an anode collector tab 5-4 were respectively connected to a cathode case cap 5-5 and an anode case cap 5-6 by spot welding. Each of the cathode case cap 5-5 and the anode case cap 5-6 was welded onto the battery case 5-1 by laser beam welder to seal the battery.

Finally, electrolyte was filled in through a filling port 5-7 shown in Fig. 5. For this electrolyte, 25 g of 1.0 M solution of lithium salt phosphoric acid hexafluoride (LiPF₆) solved into a solvent of 1:1 mixture of ethyl carbonate (EC) and dimethyl carbonate (DMC) was used. Being connected to a charging and discharging apparatus, the fabricated battery was given an initializing charging and discharging. Firstly, the battery was charged flowing 3 A of constant current until it reached a charge termination voltage of 4.2 V. After giving 1-hour rest, the battery was discharged with a flow of constant current of the same magnitude until it falls to 2.7 V. The initialization efficiency was 89.5 % and the initial discharge capacity was 3.2 Ah. Said battery was examined for the power density per weight under the condition being charged to the depth of charge of 70 %. The output was derived from the limiting current obtained by extrapolating the output voltage to 2.5 V based on output voltages measured after 10 seconds from start of discharges at the rates of 10 A, 30 A, and 90 A. Since the battery weight was 260 g, it was understood that a high-output battery having 3.5 kW/kg of the power density per weight was obtained. This is contributed by the effect of increased workable contact area of the active material with the electrolyte, because the primary particles in the cathode active material are dispersed in the electrode.

### (Comparative Example 1)

Predetermined amount of powders of Li₂CO₃, MnO₂, TiO₂, and NiO were weighed and mixed as material, which was sintered in flowing oxygen at 800 °C for 24 hours to synthesize a cathode active material expressed with the chemical formula Li(Ni_{0.5}Ti_{0.5})_{0.15}Mn_{1.85}O₄.

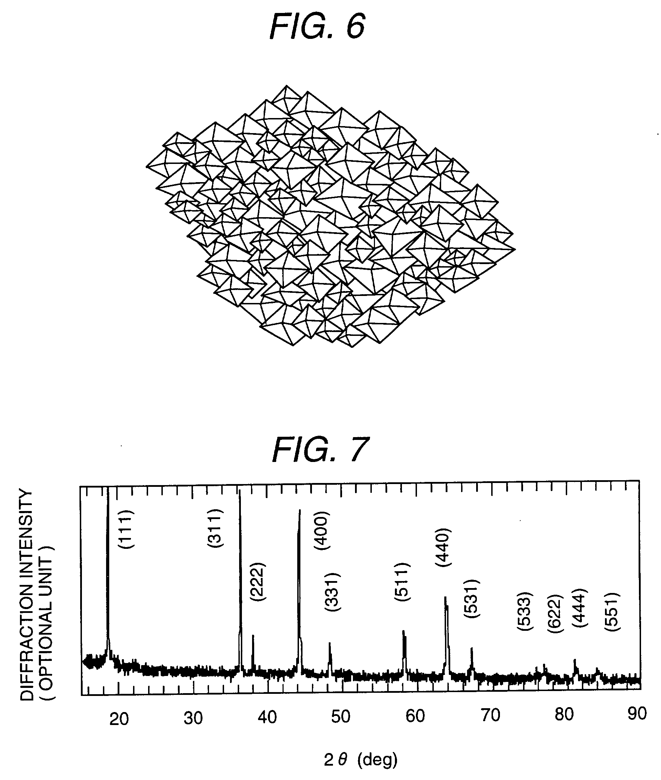

Figuration of the particle grow in the cathode active material was observed under a SEM. As shown in Fig. 6, the size of the primary particle, which was approximately octagonal with smooth-face crystal, was 1 µm or more. Said primary particle was nonisolable in figuration and the average particle size in the size distribution of the secondary particle examined by a micro-tracking method was 12.3 µm. An examination on the particle size distribution of the primary particle using the same measuring method as the one in the embodiment 1 showed that the average particle size was 11.8 µm. An X-ray analysis showed peaks particular to spinel chemical compounds as shown in Fig. 7, which confirmed desired material has been obtained.

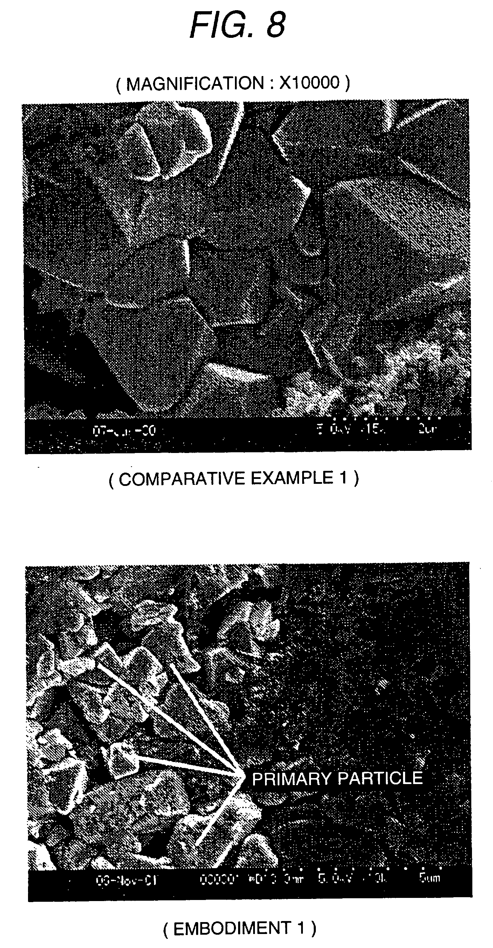

Using the cathode active material in this comparative example, the same cylindrical lithium secondary battery as the one in the embodiment 1 was fabricated. The SEM observation on the cathode plate showed the presence of primary particles without isolation but retaining the figuration of the secondary particle of cathode active material. The result of observance on the cathode plate in the embodiment 1 and the result of this comparative example, as shown in Fig. 8, obviously indicate that dispersion figurations of cathode-composing materials in cathode plates are not identical.

The output performance of said cylindrical lithium secondary battery was examined using the same method as the one in the embodiment 1. The power density per weight of the cylindrical lithium secondary battery in this comparative example was 1.5 kW/kg, which was lower than that of the cylindrical lithium secondary battery in the embodiment 1. Further, a cyclic pulse test, the same test as the one in the embodiment 1, showed the output after 50000 cycles of routine was 65 % of the initial output, which is larger decrease than that of the embodiment 1.

### (Embodiment 2)

Powders of Li₂CO₃, MnO₂, and CoO were mixed as material, which was sintered to obtain a cathode active material expressed by the chemical formula Li_{1.05}Mn_{1.92}Co_{0.08}O₄. In this process, these material powders were mixed and ground well with a ball mill to fine the material powder into 0.01 µm or smaller. Then, this mixture was treated in flowing air at a sintering temperature between 700 °C and 1100 °C for 24 hours.

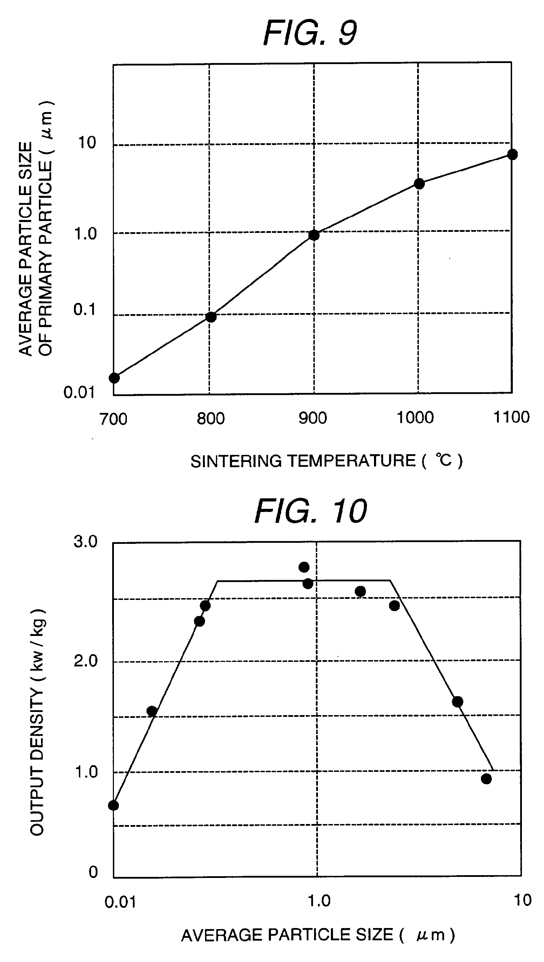

The cathode active material in this embodiment has had a particle growth that allows the primary particle to be isolated. The average particle size of this cathode active material was determined by the same method as was employed in the embodiment 1. Fig. 9 shows the relationship between the sintering temperature and the average particle size of the primary particle. The particle growth does not develop under sintering temperatures below 800 °C and the primary particle will not become larger than 0.05 µm in its particle size. Moreover, the same cylindrical lithium secondary battery as the one in the embodiment 1 using said cathode active material was fabricated.

Fig. 10 is the diagram that shows the relationship between the average particle size and the output of the cylindrical lithium secondary battery. A high battery-output is not available from the battery when the average particle size of the primary particle is 0.05 µm or less because of inadequate contact with the conductive member. However, high output is obtainable when said average size is from 0.05 µm to 5 µm because of substantially increased contact area with the electrolyte or conductive member. When the average particle size was over 0.5 µm, reduction of the specific surface area of the cathode active material thereby caused a sharp decrease of output.

## Claims

1. A cathode active material for a lithium secondary battery, said cathode active material comprising an oxide particle which includes lithium and manganese, said oxide particle comprised of a primary particle (1-1) and of a secondary particle (1-2) composed of bonded particles of said primary particle (1-1); wherein the amount of said primary particle (1-1) occupies more than half of the entire amount of said oxide particle.

2. The cathode active material for a lithium secondary battery according to claim 1, wherein the average particle size of said oxide particle is in the range of 0.05 µm to 5 µm.

3. A cathode active material for a lithium secondary battery, said cathode active material comprising an oxide particle which includes lithium and manganese, said oxide particle ranging 0.05 µm to 5 µm in the average particle size thereof; wherein 95 % or more of the entire amount of said oxide particle fall within 0.5 µm to 3.0 µm in their particle sizes.

4. The cathode active material for a lithium secondary battery according to any one of claims 1 - 3, wherein the average particle size of said primary particle (1-1) is in the range of 0.05 µm to 5 µm.

5. The cathode active material for a lithium secondary battery according to any one of claims 1 - 4, wherein said oxide particle is a spinel-structured oxide expressed with the chemical formula:
Li₁₊ₓMn_{2-x-y}M_{y}O_{4-d}
(where; 0<x<0.33, 0<y<0.50, 0<d<0.10, and Mn and M are cation elements other than Li).

6. A lithium secondary battery comprising a cathode, an anode, a separator, and nonaqueous electrolytic solution, wherein an active material for said cathode is comprised of the active material specified in any one of claims 1.

7. The lithium secondary battery according to claim 6, wherein the output energy density ranges from 650 W/kg to 2000 W/kg under a depth of discharge of 50 %.

8. A method of manufacturing a cathode active material for a lithium secondary battery, said cathode active material comprising an oxide particle which includes lithium and manganese; wherein said method comprises:
grinding and mixing, using a ball mill, a pulrverulent raw material of said oxide particle which includes lithium and manganese to obtain a ground mixture of said pulverulent raw material;
sintering said ground mixture to cause reaction for making said ground mixture form a primary particle comprised of a composite oxide; and
powdering, using a wet ball mill, a secondary particle composed of bonded particles of said primary particle through said sintering.

9. A setup module of batteries comprising the lithium secondary batteries according either to claim 6 which are connected in series or parallel, wherein the output energy density of said setup module ranges from 650 W/kg to 2000 W/kg under a depth of discharge of 50 %.
